Europäisches Patentamt

European Patent Office

Office européen des brevets

(19)

(11) Publication number: **0 203 786 B1**

# EUROPEAN PATENT SPECIFICATION

(12)

(45) Date of publication of patent specification: **18.09.91**     (51) Int. Cl.5: **G11B 19/24**, G11B 19/247

(21) Application number: **86303911.1**

(22) Date of filing: **22.05.86**

(54) Recording medium rotation control apparatus.

(30) Priority: **29.05.85 JP 114180/85**
**29.05.85 JP 114181/85**
**04.06.85 JP 120918/85**

(43) Date of publication of application:
**03.12.86 Bulletin 86/49**

(45) Publication of the grant of the patent:
**18.09.91 Bulletin 91/38**

(84) Designated Contracting States:
**DE FR GB**

(56) References cited:
**FR-A- 2 502 870**
**FR-A- 2 514 541**
**FR-A- 2 534 709**

**PATENT ABSTRACTS OF JAPAN, vol. 7, no.
156 (P-209)[1301], 8th July 1983; & JP-A-58 64
672 (SONY K.K.) 18-04-1983**

(73) Proprietor: **MATSUSHITA ELECTRIC INDUSTRI-
AL CO., LTD.**
**1006, Oaza Kadoma**
**Kadoma-shi, Osaka-fu, 571(JP)**

(72) Inventor: **Sakakibara, Yoshio**
**Shoutou-ryo, 5-103, Touda-chou**
**Moriguchi-shi Osaka-fu 570(JP)**
Inventor: **Akiyama, Ryo**
**1-47-1-210, Higashiyama**
**Hirakata-shi Osaka-fu 573(JP)**
Inventor: **Inatomi, Shoich**
**D13-518, 9-6-1, Kourigaoka**
**Hirakata-shi Osaka-fu 573(JP)**
Inventor: **Ema, Noriyuki**
**2-103, 46-ban, Yamadaikehigashimachi**
**Hirakata-shi Osaka-fu, 573-01(JP)**

(74) Representative: **Crawford, Andrew Birkby et al
A.A. THORNTON & CO. Northumberland
House 303-306 High Holborn
London WC2A 1AY(GB)**

## Description

### 1. Field of the Invention

The present invention relates to a recording medium rotation control apparatus for an information reproducing apparatus for reproducing information from a recording medium in which information modulated in a run length limited code has been recorded on concentric or spiral information tracks at a constant linear velocity.

### 2. Description of the Prior Art

In some recording media information modulated in the run length limited code is recorded on concentric or spiral information tracks at a constant linear velocity in order to increase recording density. The compact disk is a typical example of such recording media. When information is to be reproduced from a recording medium of this type, it is required to maintain constant the linear velocity of the recording medium by changing the rotation velocity thereof according to the position of an information track from which information is to be reproduced.

In order to accomplish this, there is available a method for controlling the rotation of the recording medium to be a constant linear velocity by using a signal reproduced from the recording medium as disclosed, for example, in Japanese Laid-Open Patent Application No. 57-58269. This method utilizes the principle that a maximum or minimum value of an inversion time from one state inversion to another state inversion of a signal reproduced from the recording medium varies with the linear velocity during reproduction. Namely, such maximum or minimum value is compared with a reference value of maximum or minimum inversion time determined by the modulating method, thus achieving rotation control for the constant linear velocity.

This method, however, has a defect that control errors would easily occur due to influence of an offset error component included in the state inversion time or included in the detected maximum or minimum inversion time. This method further has a defect that the rotation control would be easily disturbed since the maximum or minimum inversion time undergoes a great change when the reproducing means moves across an information track of the recording medium or when the linear velocity is so small that the reproducing means cannot accurately track the information tracks of the recording medium.

An apparatus for reproducing a pulse code modulated signal recorded in run length limited code on a recording medium is disclosed in U.K. Patent 2,097,560. The apparatus includes a first comparing circuit for comparing a reproduced signal received from the recording medium with a first reference signal so as to produce an output signal having positive and negative portions corresponding to the input signal; a detecting circuit for detecting a maximum or minimum transition interval contained in the output signal and for producing a detecting signal; a second comparing circuit for comparing the detecting signal with a second reference signal corresponding to the maximum or minimum transition interval during reproduction of the recording medium at a predetermined velocity and for producing a first control signal to be supplied to a velocity servo circuit including a first time constant circuit for controlling the velocity of the recording medium; a phase locked loop for producing a phase signal from the reproduced signal; an oscillating circuit for deriving a reference phase signal; and a third comparing circuit for comparing the phase signal from the phase locked loop with the reference phase signal and for producing a second control signal to be supplied to a phase servo circuit including a second time constant circuit for controlling the phase of the reproduced signal, the first time constant circuit having a time constant larger than that of said second time constant circuit.

A disc drive control system is disclosed in U.K. patent 2,130,400 which includes a frame sync servo generator for generating a frame sync servo signal from the output signal of the pick (which detects the digital signal on the disc), by detecting a frequency of a state in which only one positive or negative transition appears within a time period near to twice the maximum transition interval. The system included a quartz servo signal generator for generating a quartz servo signal by using a phase difference signal indicative of the phase difference between a playback frame sync signal obtained by a demodulation of the digital signal and a reference frame sync signal.

It is an object of the present invention to provide a recording medium rotation control apparatus which is hardly influenced by an offset error component included in a state inversion time or the detected minimum or maximum inversion time of a reproduced signal from a recording medium.

It is another object of the present invention to provide a recording medium rotation control apparatus which is hardly influenced by variations of the maximum or minimum inversion time which are produced when a reproducing means moves across an information track of a recording medium or when the linear velocity is so small that the reproducing means cannot accurately track the information tracks of the recording medium.

The present invention provides a recording medium rotation control apparatus for controlling rotation of a recording medium in which a signal modulated in a runlength limited code has been recorded in concentric or spiral information tracks at a constant velocity, comprising:

a motor for rotating said recording medium;

a reproducing means for reproducing a signal recorded in said recording medium from said recording medium to obtain a reproduced signal;

waveform shaping means for shaping said reproduced signal to obtain a reproduced digital signal;

inversion time detecting means for detecting an inversion time signal indicative of a maximum or minimum value of inversion time of said reproduced digital signal; whereby

said inversion time detecting means alternately detects a maximum or minimum value of inversion time of said reproduced digital signal from its rise transition to its fall transition and a maximum or minimum value of inversion time of said reproduced digital signal from its fall transition to its rise transition to obtain, as said inversion time signal, a signal corresponding to both the maximum or minimum value of inversion time of said reproduced digital signal from its rise transition to its fall transition and the maximum or minimum value of inversion time of said reproduced digital signal from its fall transition to its rise transition, and

motor drive means for driving said motor in response to an input signal indicative of the tangential velocity of the disc at the reproduced track so as to reduce a difference between said input signal and a predetermined reference value,

characterised in that said inversion time signal is the input signal to the motor drive means indicative of the tangential velocity of disc.

The rotation control apparatus in accordance with the present invention may include inversion time detecting means for dividing the reproduced digital signal and then detecting a minimum value of inversion time of the divided reproduced digital signal from one state inversion to another state inversion, thereby to supply an inversion time signal corresponding to such minimum value. With this arrangement, the rotation control apparatus in accordance with the present invention can achieve highly accurate rotation control which is hardly influenced by variations of the maximum or minimum inversion time which are produced when the reproducing means moves across an information track of the recording medium or when the linear velocity is so small that the reproducing means cannot accurately track the information track of the recording medium.

Brief Description of the Drawings

Figure 1 is a block diagram of a rotation control apparatus in accordance with one embodiment of the present invention.

Fig. 2 is a block diagram of a rotation control apparatus in accordance with another embodiment of the present invention.

Fig. 3 is a circuit diagram of a first example of inversion time detecting means.

Fig. 4 is a diagram showing signal waveforms at respective portions of the circuit in Fig. 3.

Fig. 5 is a circuit diagram of a second example of inversion time detecting means.

Fig. 6 is a diagram showing signal waveforms at respective portions of the circuit in Fig. 5.

Fig. 7 is a circuit diagram of a third example of inversion time detecting means.

Description of the Preferred Embodiments

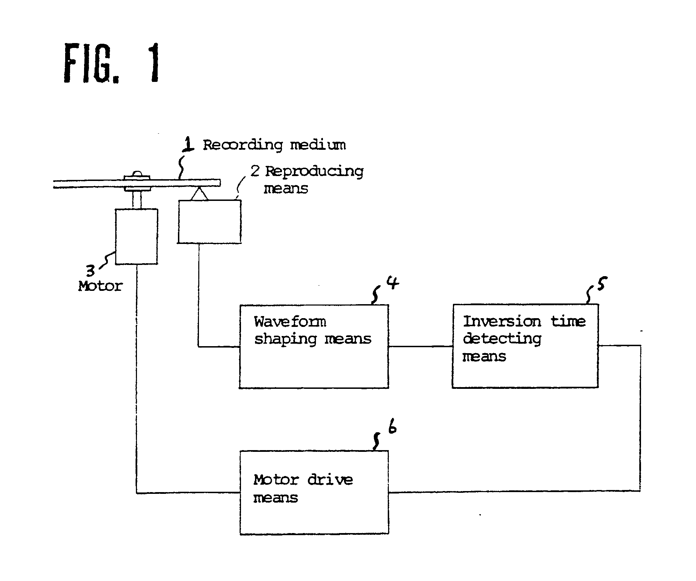

Fig. 1 is a block diagram of a rotation control apparatus in accordance with one embodiment of the present invention. In Fig. 1, the rotation control apparatus coupled to a recording medium 1 comprises reproducing means 2 including a reproducing head, a motor 3, waveform shaping means 4, inversion time detecting means 5 and motor drive means 6. The reproducing means 2 is adapted to reproduce a digital signal recorded on an information track of the recording medium 1. Such reproducing may be made optically or magnetically, or with the use of electrostatic capacity. If necessary, the reproducing means 2 may include means for tracking control or optical focus control. A reproduced signal supplied from the reproducing means 2 has a dull wave form because the recording density of the recording medium 1 has been enhanced up to the vicinity of the reproducible limit of the reproducing means 2. The reproduced signal is therefore shaped in waveform by the waveform shaping means 4, which supplies a reproduced digital signal having a waveform closer to the recorded waveform. The waveform shaping means 4 may be a simple comparator or may be so arranged that the threshold value of a comparator follows the center value of the reproduced signal to supply a reproduced digital signal having a waveform closer to the recorded waveform. The inversion time detecting means 5 receives the reproduced digital signal to supply an inversion time signal corresponding to the maximum or minimum state inversion time. The detailed description of the operation of the inversion time detecting means 5 will be discussed later. The maximum or minimum state inversion time is in inverse proportion to the linear velocity of the recording medium, so that the inversion time signal also has a value corresponding to the linear velocity. The motor drive means 6 compares the inversion time signal with a reference value corresponding to a control target to drive the motor 3 in such direction as to reduce a difference between the inversion time signal and the reference value. The motor 3 is driven by the motor drive means 6 to apply a rotation torque to the recording medium. In such manner, the linear velocity of the recording medium can be controlled to be a predetermined constant value.

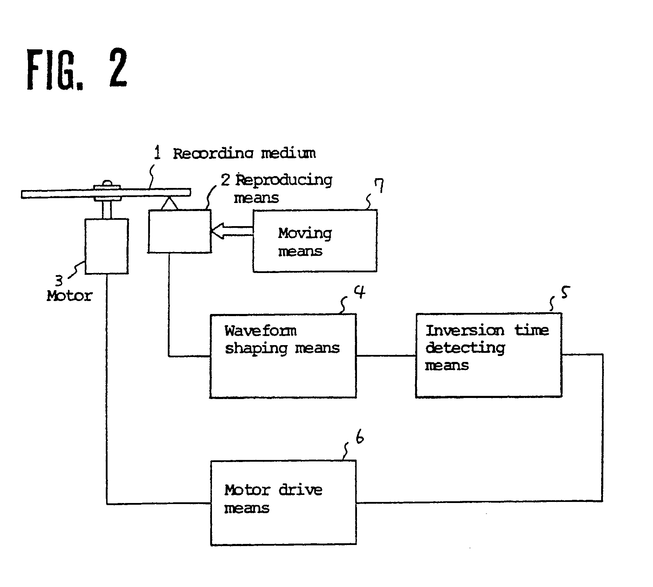

Fig. 2 is a block diagram of a rotation control apparatus in accordance with another embodiment of the present invention. This rotation control apparatus is the same as the apparatus in Fig. 1 except that it includes moving means for moving the reproducing means 2 in the radial direction of the recording medium. The inversion time detecting means 5 can extract linear velocity information from a reproduced digital signal which is intermittently reproduced while the reproducing means 2 is moving in the radial direction of the recording medium. In this embodiment too, the linear velocity can be controlled to a predetermined constant value as in the embodiment in Fig. 1.

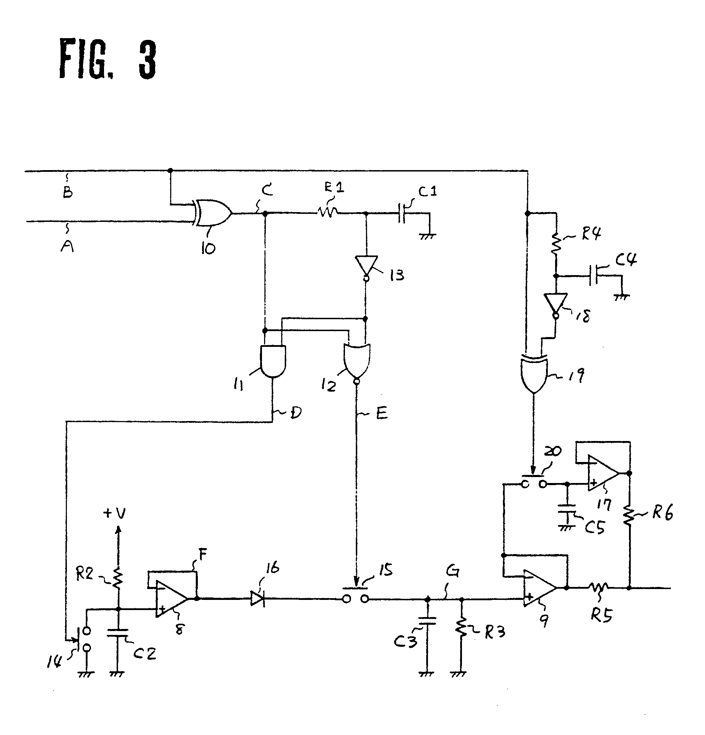

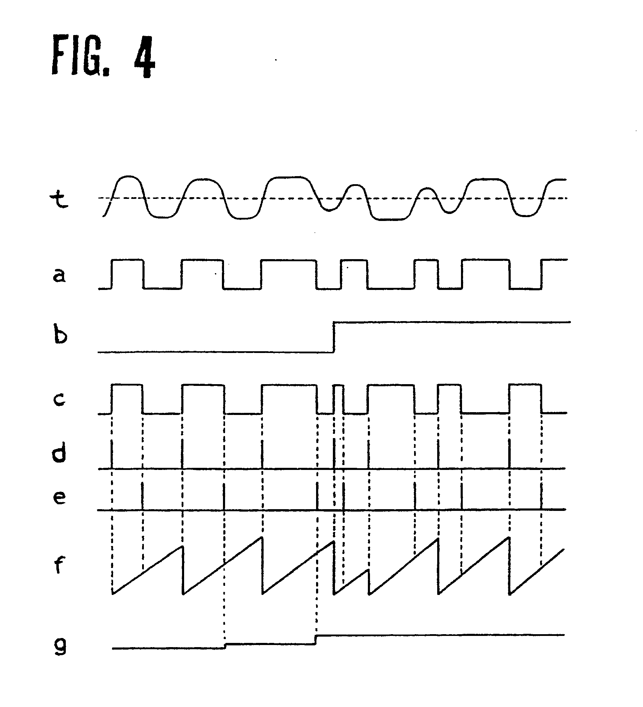

Fig. 3 is a circuit diagram of a first example of the inversion time detecting means. Fig. 3 shows operational amplifiers 8, 9 and 17, exclusive-OR gates 10 and 19, an AND gate 11, a NOR gate 12, NOT gates 13 and 18, analog switches 14, 15 and 20, resistors R1 to R6, capacitors C1 to C5, and a diode 16. The operation of the inversion time detecting means constructed as above will be explained with reference to Fig. 4. Fig. 4 shows the waveforms of signals at the respective parts in Fig. 3. In Fig. 4, a to g show respectively the waveforms of signals at points A to G in Fig. 3. In Fig. 4, t represents a reproduced signal supplied from the reproducing means 2, while the broken line represents a threshold value of the waveform shaped by the waveform shaping means 4. A resultant reproduced digital signal supplied from the waveform shaping means 4 is represented by a. At this time, if the threshold value is varied for some reason, the duty of the reproduced digital signal a is also influenced and the maximum inversion time is also changed. However, the pulse width at the "H" level and the pulse width at the "L" level are changed in different directions. Accordingly, when the maximum pulse widths at the respective levels are detected and the average is obtained, the error component is offset so that an accurate value can be obtained. For achieving this in a simple manner, two circuits each having the same arrangement are required. The circuit arrangement in Fig. 3 can produce the equivalent effect with the addition of a simple circuit. A reproduced digital signal supplied from the point A passes through the gate 10. At this time, when a polarity changeover signal at the point B is "L", the reproduced digital signal as it is passes through the gate 10, but when the polarity changeover signal is "H", the reproduced digital signal is inverted. The resistor R1, the capacitor C1 and the gate 13 constitute a delay circuit. Together with the gates 11, 12, this delay circuit produces rise transition and fall transition edge pulses d and e from the signal c entered to the point C. The rise transition edge pulse d closes the analog switch 14 to discharge the capacitor C2. Thereafter, the capacitor C2 is charged through the resistor R2. When the fall transittion edge pulse e closes the analog switch 15, the electric potentials at the points F and G are compared with each other through the diode 16. When the electric potential at the point G is lower than that at the point F, the capacitor C3 is charged so that the both potentials become equal to each other. The resultant electric potential at the point G or the output of the operational amplifier 9 is in proportion to the maximum inversion time. A polarity changeover signal at the point B is supplied to an edge detecting circuit constituted by the resistor R4, the capacitor C4 and the gates 18, 19. Each time this signal is inverted, the gate 19 supplies a sampling pulse. The sampling pulse closes the analog switch 20, and the output of the operational amplifier 9 is sampled in the capacitor C5. Through the resistors R5 and R6, there is supplied, as an inversion time signal, the average of the output of the operational amplifier 9 and the output of the operational amplifier 17 which is holding the maximum inversion time in the previous sampling. When the frequency of the polarity changeover signal at the point B can be sufficiently high as compared with the response frequency of the rotation control apparatus, the circuit for sampling and average calculation can be omitted and the output of the operational amplifier 9 can be used as an inversion time signal. The resistor R3 is operative to erase past data of linear velocity so that the latest data of linear velocity can be maintained in the capacitor C3 at all times.

As thus described, the present invention can provide a rotation control apparatus which is hardly influenced by an offset error component included in the state inversion time or the detected maximum inversion time of a reproduced signal.

In this example, the description has been made of the circuit for detecting a maximum inversion time, but a circuit for detecting a minimum inversion time can be arranged with a minor modification. For such purpose, it is merely required to invert the polarity of the diode 16 and to change the connection of the resistor R3 from the ground to a supply voltage +V. The circuit thus modified can also bring about such result achieved in this example that the influence by the offset error component is hardly exerted.

The inversion time detecting means in Fig. 3 is merely one example. The inversion time detecting means can be arranged in any way as far as it alternately detects a maximum or minimum value of inversion time of a reproduced digital signal from its rise transition to its fall transition, and a maximum or minimum value of inversion time of the reproduced digital signal from its fall transition to its rise transition, thereby to supply an inversion time signal corresponding to such maximum or minimum value. In this example, as the linear velocity is increased, the inversion time signal changes so as to be reduced. The inversion time detecting means can also be arranged so that the inversion time signal is increased as the linear velocity is increased.

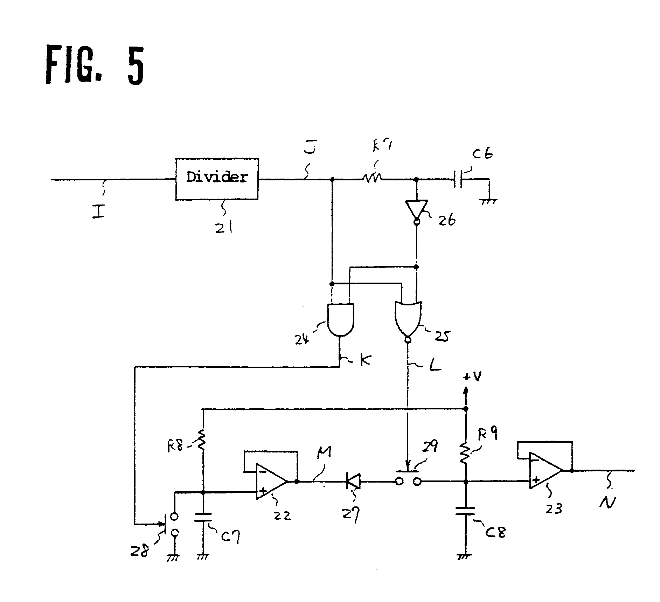

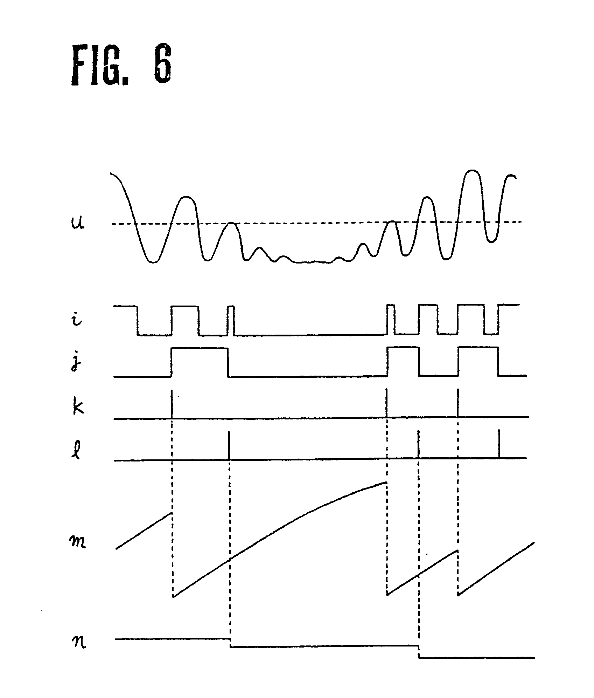

Fig. 5 is a circuit diagram of a second example of the inversion time detecting means. Fig. 5 shows a divider 21, operational amplifiers 22 and 23, an AND gate 24, a NOR gate 25, a NOT gate 26, analog switches 28 and 29, resistors R8 to R9, capacitors C6 to C8 and a diode 27. This example is the same as the first example except the polarity of the diode 27, the connection of the resistor R9 and the provision of the divider 21. Accordingly, the inversion time detecting means in Fig. 5 is so arranged as to detect a minimum inversion time of a reproduced digital signal after divided. Fig. 6 illustrates the waveforms of signals at the respective parts in Fig. 5. In Fig. 6, i to n represent the waveforms of signals at points I to N in Fig. 5. A reproduced digital signal i is first divided by two by the divider 21. The subsequent operations until electric potential substantially in proportion to the minimum inversion time of the reproduced digital signal thus divided by two appears at the output N of the operational amplifier 23, are substantially the same as in the circuit in Fig. 3. Fig. 6 shows the waveforms of signals at a time when the reproducing means 2 enters a gap between information tracks of the recording medium. At u in Fig. 6, the solid line represents a reproduced signal from the reproducing means 2, while the broken line represents a threshold value of the waveform shaped by the waveform shaping means 4. Between information tracks, a reproduced signal is attenuated and no correct information of linear velocity can be obtained due to noise or cross-talk. The threshold value is therefore set to a value deviated from the center value of the reproduced signal between information tracks, as shown in Fig. 6. At this time, the duty of the reproduced digital signal i greatly varies and the reproduced digital signal includes a pulse of a narrow width which cannot be included when the reproducing means 2 tracks the information tracks for reproducing the information. It is, however, understood from Fig. 6 that the minimum inversion time of a divided reproduced digital signal j is hardly subject to the resultant influence. An inversion time signal n therefore gives accurate information of linear velocity.

This example can also be utilized for detecting a brake termination for stopping the rotation of the recording medium. When a recording medium stop command is received, the motor drive means 6 begins to reduce the speed of the motor 3. When it is detected from an inversion time signal that the inversion time has exceeded a value corresponding to a predetermined linear velocity, the motor drive means 6 stops such speed reduction. In concrete manner, for example, the motor drive means 6 supplies an entered inversion time signal and a value corresponding to a predetermined linear velocity to a comparator, and an output signal from the comparator and the record medium stop command then compose a signal for reducing the speed of the motor by a simple logic circuit. The inversion time detecting means in this example can detect the inversion time with high accuracy even though the linear velocity is so small that the tracking control by the reproducing means becomes unstable. The sufficient reduction in the speed of the recording medium can therefore be detected accurately without delay, so that the brake can be released. As a result, the rotation of the recording medium can be quickly stopped.

According to this example, even when the reproducing means moves across an information track of the recording medium, the inversion time signal can be accurately obtained, so that the rotation of the recording medium can be controlled to make the linear velocity constant according to the position of the reproducing means. Moreover, when the inversion time detecting means of this example is used for detecting a brake termination for stopping the rotation of the recording medium, the rotation of the recording medium can be quickly stopped.

The inversion time detecting means in Fig. 5 is merely one example. The inversion time detecting means can be arranged in any way as far as it can detect a minimum value of inversion time of a reproduced digital signal after divided, from one state inversion to next state inversion, thereby to supply an inversion time signal corresponding to the detected minimum value. In the example shown in Fig. 5, there has been described the divider 21 which divides a signal by two, but the division number is not limited to two. It is, however, noted that, as the division number is increased, the frequency at which a minimum run length is continuously generated, is reduced. Therefore, an increased division number assures more stable detection of a minimum inversion time, but such detection with an increased division number takes more time. It is therefore desirable to minimize the division number to such extent that the stability of detection of a minimum inversion time is not injured.

In this example, as the linear velocity is increased, the inversion time signal is changed so as to be reduced. The inversion time detecting means can also be arranged so that the inversion time signal is increased as the linear velocity is increased.

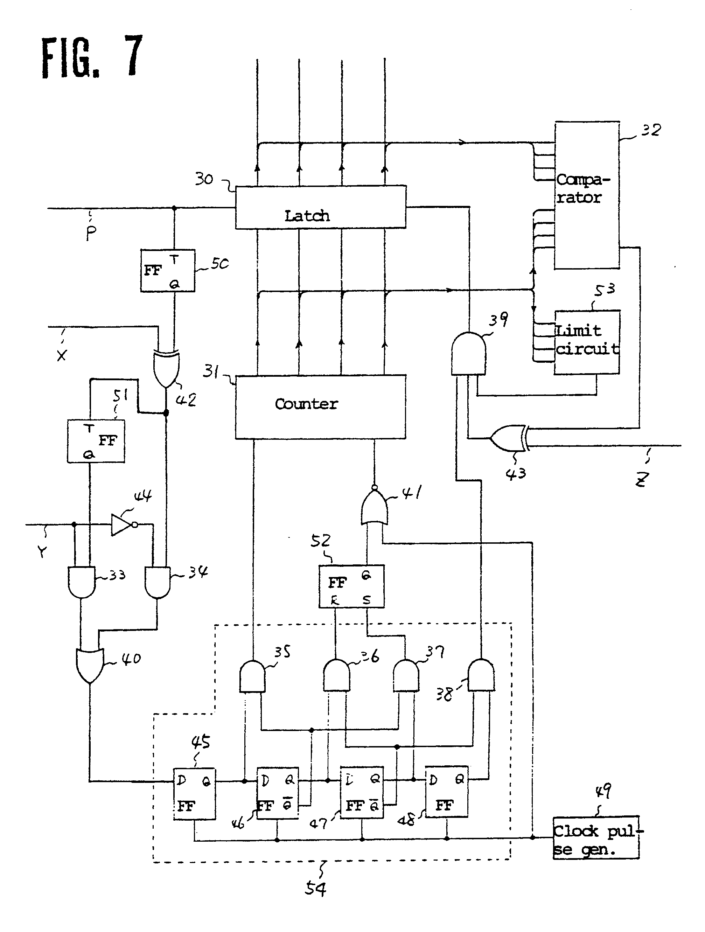

Figure 7 is a circuit diagram of a third example of the inversion time detecting means. Figure 7 shows a latch 30, a counter 31, a magnitude comparator 32, AND gates 33 to 39, an OR gate 40, a NOR gate 41, Exclusive-OR gates 42 and 43, a NOT gate 44, D flip-flops 45 to 48, a clock pulse generator 49, T flip-flops 50 and 51, an RS flip-flop 52 and a limit circuit 53.

The description will first discuss the operation of this circuit when a point Y is in the "H" level.

A reproduced digital signal entered from a point X and passed through the exclusive-OR gate 42 is divided by the T flip-flop 51, passes through a selector constituted by the gates 33, 34, 40, 44 and is sent to a timing pulse generating circuit 54 consititued by the D flip-flops 45 to 48 and the gates 35 to 38. The clock pulse generator 49 supplies a clock pulse to the counter 31 through the D flip-flops 45 to 48 and the gate 41. The timing pulse generating circuit 54 generates a rise transition edge pulse, a fall transition edge pulse and their delayed pulses. The RS flip-flop 52 is operated by these pulses to open/close the gate 41 connected to the clock input terminal of the counter 31. After reset by a rise transition edge pulse supplied from the gate 35, the counter 31 counts by the number of clocks supplied from the gate 41. Output from the counter 31 and the latch 30 are compared with each other as to the magnitude by the magnitude comparator 32. When the comparison result coincides with the polarity selected by the input at a point Z, the gate 39 is opened. It is now supposed that the output of the limiting circuit 53 connected to the gate 39 is in the level "H". When the counting of the counter 31 is complete, a latch pulse is supplied from the gate 38. If the gate 39 is open, the contents of the latch 30 are renewed to a value supplied from the counter. As a result, according to the input at the point Z, the output from the latch 30 has a value substantially in proportion to the maximum or minimum inversion time of the divided reproduced digital signal.

The reproduced digital signal may include a minor cycle noise pulse which does not appear in a normal code modulation dependent on the characteristics of the reproducing means 2 or the waveform shaping means 4. If this was detected as a minimum value, correct control cannot be achieved. In particular, when the reproducing means moves across an information track of the record medium, there is often presented such phenomenon. In this case, the output of the counter 31 is monitored by the limiting circuit 53 and, if there is counted a value which does not appear in a normal control range, the output of the limiting circuit 53 becomes "L", so that the gate 39 is closed to prevent the data renewal of the latch 30. The limiting circuit 53 can be formed, for example, by an AND gate to which a signal having arbitrary upper bits out of the output of the counter 31 is entered, when the counter 31 is of the up-counter type. With the above arrangement, the bad influence of the minor cycle noise pulse can be eliminated. When the reproduced digital signal does not contain the minor cycle noise pulse or when the inversion time detecting means is used for detecting the maximum inversion time, the limiting circuit 53 can be omitted.

The input line P is connected to a preset input line of the latch 30 for presetting a value at the beginning of sampling for detection of an inversion time. A preset value loaded to the latch 30 at this time is required to be changed depending on the operation state of detection of a maximum or minimum inversion time. The input P is supplied to the T flip-flop 50 to invert the output thereof.

When the input Y is in the "L" level, the gate 42 alternately repeats an inversion operation and a non-inversion operation every sampling period by the output of the T flip-flop 50 which is inverted every sampling period and is connected to one input terminal of the gate 42. A reproduced digital signal entered from the point X is sent to the other input terminal of the gate 42. After inverted or non-inverted, this signal passes through the selector constituted by the gates 33, 34, 40, 44, and is sent to the D flip-flop 45. The subsequent operations are made in the same manner as in the case where the input Y is in the "H" level. As a result, according to the value of input Z, the output from the latch 30 has a value in proportion to the maximum or minimum inversion time of a reproduced digital signal. However, the detected polarity is inverted every sampling period.

According to this example, there can be provided a rotation control apparatus which is hardly influenced by an offset error component included in the state inversion time or detected maximum or minimum inversion time of a reproduced signal. Even if the reproducing means moves across an information track of the recording medium, an inversion time signal can be accurately obtained so that the rotation of the recording medium can be controlled to make the linear velocity constant according to the position of the reproducing means.

When the inversion time detecting means according to this example is used for detection of a brake termination for stopping the rotation of the recording medium, the rotation of the recording medium can be quickly stopped. In such case, the inversion time detecting means is arranged so as to detect a minimum inversion time, and the recording medium braking operation can be made by the motor drive means in the same manner as in the second example.

The inversion time detecting means in Fig. 7 is merely one example. The inversion time detecting means can be arranged in any way as far as it can measure a state inversion time between one state inversion and next state inversion of a reproduced digital signal as it is or after divided, and can detect a maximum or minimum value of inversion time as necessary, and can supply an inversion time signal corresponding to such maximum or minimum value thus detected.

In Fig. 7, 4-bit counter and latch are used, by way of example, for measuring the inversion time, but an arbitrary number of bits can be used in order to assure the accuracy required for rotation control. In this example, the description has been made of the case where a reproduced digital signal is divided by two, but the division number is not limited to particular one as stated in the second example.

There have been thus described and illustrated some examples of the inversion time detecting means of the recording medium rotation control apparatus in accordance with the present invention. However, the method of arranging the inversion time detecting means should not be limited to these examples. The inversion time detecting means having the same function as that in the first or second example may be arranged in digital circuit, and the inversion time detecting means having the same function as that in the third example may be arranged in analog circuit. A circuit may be added to the first example so that the minimum inversion time can also be detected, and a circuit may be added to the second example so that the maximum inversion time can also be detected.

When detection of a brake termination is to be made in the motor drive means, the inversion time detecting means can be so arranged that an inversion time signal is merely compared with a predetermined value, or can be arranged so as to detect that an inversion time signal is continuously below or exceeds a predetermined value for a predetermined period of time. In the latter case, erroneous operations due to noise included in the inversion time signal can be effectively prevented.

**Claims**

1. A recording medium rotation control apparatus for controlling rotation of a recording medium (1) in which a signal modulated in a runlength limited code has been recorded in concentric or spiral information tracks at a constant velocity, comprising:

a motor (3) for rotating said recording medium; a reproducing means (2) for reproducing a signal recorded in said recording medium from said recording medium to obtain a reproduced signal;

waveform shaping means (4) for shaping said reproduced signal to obtain a reproduced digital signal;

inversion time detecting means (5) for detecting an inversion time signal indicative of a maximum or minimum value of inversion time of said reproduced digital signal; whereby

said inversion time detecting means (5) alternately detects a maximum or minimum value of inversion time of said reproduced digital signal from its rise transition to its fall transition and a maximum or minimum value of inversion time of said reproduced digital signal from its fall transition to its rise transition to obtain, as said inversion time signal, a signal corresponding to both the maximum or minimum value of inversion time of said reproduced digital signal from its rise transition to its fall transition and the maximum or minimum value of inversion time of said reproduced digital signal from its fall transition to its rise transition, and

motor drive means (6) for driving said motor in response to an input signal indicative of the tangential velocity of the disc at the reproduced track so as to reduce a difference between said input signal and a predetermined reference value,

characterised in that said inversion time signal is the input signal to the motor drive means indicative of the tangential velocity of the disc.

2. An apparatus as set forth in claim 1, wherein said inversion time detection means (5) includes averaging means (20, C5, 17, R5, R6) for averaging the maximum or minimum value of inversion time of said reproduced digital signal from its rise transition to its fall transition and the maximum or minimum value of inversion time of said reproduced digital signal from its fall transition to its rise transition to obtain, as said inversion time signal, a signal indicative of an average of said maximum or minimum values.

3. An apparatus as set forth in claim 1, wherein said inversion time detecting means (5) includes dividing means (21, 51) for dividing said reproduced digital signal by n, where n is a positive integer, and detects maximum or minimum values of inversion time of the divided reproduced digital signal.

4. An apparatus as set forth in claim 1, further comprising moving means (7) for moving said reproducing means (2) in a radial direction of said recording medium (1), wherein said motor (3) is controlled with the use of a reproduced signal intermittently given when said reproducing means is moved across an information track of said recording medium by said moving means.

5. An apparatus as set forth in claim 1, wherein said motor drive means (6) is adapted to receive a recording medium stop command to reduce the speed of said motor (3) until it is detected from the inversion time signal that the linear velocity of said recording medium has fallen below a predetermined value.

6. An apparatus as set forth in claim 1, wherein said inversion time detecting means (5) is operative to detect a minimum inversion time when the state inversion time is equal to, or more than a predetermined value.

**Revendications**

1. Appareil de commande de rotation de support d'enregistrement permettant de commander la rotation d'un support d'enregistrement (1) sur lequel un signal modulé selon un code limité en longueur a été enregistré dans des pistes d'information concentriques ou sous forme de spirale à une vitesse constante, cet appareil comprenant :

   un moteur (3) qui permet de faire tourner ledit support d'enregistrement ;

   un moyen de reproduction (2) qui permet de reproduire un signal enregistré sur ledit support d'enregistrement à partir dudit support d'enregistrement afin d'obtenir un signal reproduit ;

   un moyen de mise en forme de formes d'ondes (4) qui permet de mettre en forme ledit signal reproduit afin d'obtenir un signal numérique reproduit ;

   un moyen de détection de durée d'inversion (5) qui permet de détecter un signal de durée d'inversion qui est indicatif d'une valeur maximale ou minimale d'une durée d'inversion dudit signal numérique reproduit ; de ce fait, ledit moyen de détection de durée d'inversion détecte alternativement une valeur maximale ou minimale d'une durée d'inversion dudit signal numérique reproduit depuis son front montant jusqu'à son front descendant et une valeur maximale ou minimale d'une durée d'inversion dudit signal numérique reproduit depuis son front descendant jusqu'à son front montant afin d'obtenir, en tant que dit signal de durée d'inversion, un signal qui correspond à la fois à la valeur maximale ou minimale d'une durée d'inversion dudit signal numérique reproduit depuis son front montant jusqu'à son front descendant ainsi qu'à la valeur maximale ou minimale d'une durée d'inversion dudit signal numérique reproduit depuis son front descendant jusqu'à son front montant ; et

   un moyen d'entraînement de moteur (6) qui permet d'entraîner ledit moteur en réponse à un signal d'entrée qui est indicatif de la vitesse tangentielle du disque au niveau de la piste reproduite de manière à réduire une différence entre ledit signal d'entrée et une valeur de référence prédéterminée,

   caractérisé en ce que ledit signal de durée d'inversion est le signal d'entrée du moyen d'entraînement de moteur qui est indicatif de la vitesse tangentielle du disque.

2. Appareil selon la revendication 1, dans lequel ledit moyen de détection de durée d'inversion (5) comporte un moyen de mesure des valeurs moyennes (20, C5, 17, R5, R6) qui permet de moyenner la valeur maximale ou minimale d'une durée d'inversion dudit signal numérique reproduit depuis son front montant jusqu'à son front descendant et la valeur maximale ou minimale d'une durée d'inversion dudit signal numérique reproduit depuis son front descendant jusqu'à son front montant afin d'obtenir, en tant que dit signal de durée d'inversion, un signal indicatif d'une moyenne desdites valeurs maximale ou minimale.

3. Appareil selon la revendication 1, dans lequel ledit moyen de détection de durée d'inversion (5) comporte un moyen diviseur (21, 51) qui permet de diviser ledit signal numérique reproduit par n, où n est un entier positif, et détecte des valeurs maximale ou minimale d'une durée d'inversion du signal numérique reproduit divisé.

4. Appareil selon la revendication 1, comprenant en outre un moyen de déplacement (7) qui permet de déplacer ledit moyen de reproduction (2) suivant une direction radiale dudit support d'enregistrement (1), dans lequel ledit moteur (3) est commandé avec l'utilisation d'un signal reproduit donné par intermittence lorsque ledit moyen de reproduction est déplacé au travers d'une piste d'information dudit support d'enregistrement par ledit moyen de déplacement.

5. Appareil selon la revendication 1, dans lequel ledit moyen d'entraînement de moteur (6) est étudié pour recevoir une commande d'arrêt de support d'enregistrement afin de réduire la vitesse du moteur (3) jusqu'à ce qu'il soit détecté à partir du signal de durée d'inversion que la vitesse linéaire dudit support d'enregistrement a chuté au-dessous d'une valeur prédéterminée.

6. Appareil selon la revendication 1, dans lequel ledit moyen de détection de durée d'inversion (5) permet de détecter une durée d'inversion minimale lorsque la durée d'inversion d'état est égale à une valeur prédéterminée ou est supérieure à cette valeur.

**Patentansprüche**

1. Rotationssteuerung für einen Aufzeichnungsträger zur Beeinflussung der Drehung eines Aufzeichnungsträgers (1), bei der auf konzentrischen oder spiralförmigen Informationsspuren ein Signal, das in einem bezüglich der Lauflänge beschränkten Code moduliert ist, bei einer konstanten Drehzahl aufgezeichnet ist, mit einem Motor (3) zur Drehung des Aufzeichnungsträgers, mit einer Wiedergabe-Vorrichtung (2) zur Wiedergabe eines auf dem Aufzeichnungsträger aufgezeichneten Signals von dem Aufzeichnungsträger, um ein reproduziertes Signal zu erhalten, mit einem Signalformer (4) zur Formung des reproduzierten Signals, um ein reproduziertes, digitales Signal zu erhalten, mit einem eine Umwandlungszeit wahrnehmenden Fühler (5) zur Wahrnehmung eines Umwandlungszeitsignals, das einen maximalen oder minimalen Wert einer Umwandlungszeit des reproduzierten, digitalen Signals angibt, wobei der die Umwandlungszeit wahrnehmende Fühler (5) abwechselnd einen maximalen oder minimalen Wert der Umwandlungszeit des reproduzierten, digitalen Signals von seinem Anstiegsübergang zu seinem Abfallübergang und einen maximalen oder minimalen Wert der Umwandlungszeit des reproduzierten, digitalen Signals von seinem Abfallübergang zu seinem Anstiegsübergang wahrnimmt, um als Umwandlungszeitsignal ein Signal zu erhalten, das sowohl dem maximalen oder minimalen Wert der Umwandlungszeit des reproduzierten, digitalen Signals von seinem Anstiegsübergang zu seinem Abfallübergang als auch dem maximalen oder minimalen Wert der Umwandlungszeit des reproduzierten, digitalen Signals von seinem Abfallübergang zu seinem Anstiegsübergang entspricht, und mit einem Motorantrieb (6) zum Antreiben des Motors in Abhängigkeit von einem Eingangssignal, das die Tangentialgeschwindigkeit der Scheibe an der reproduzierten Spur angibt, um die Differenz zwischen dem Eingangssignal und einem vorherbestimmten Bezugswert zu vermindern, dadurch gekennzeichnet, daß das Umwandlungszeitsignal das Eingangssignal zu dem Motorantrieb ist und die Tangentialgeschwindigkeit der Scheibe angibt.

2. Vorrichtung, wie im Anspruch 1 dargelegt, bei der der die Umwandlungszeit wahrnehmende Fühler (5) einen Mittelwertbildner (20, C5, 17, R5, R6) zur Mittelwertbildung aus dem maximalen oder minimalen Wert der Umwandlungszeit des reproduzierten, digitalen Signals von seinem Anstiegsübergang zu seinem Abfallübergang und aus dem maximalen oder minimalen Wert der Umwandlungszeit des reproduzierten, digitalen Signals von seinem Abfallübergang zu seinem Anstiegsübergang enthält, um als Umwandlungszeitsignal ein Signal zu erhalten, das einen Mittelwert der maximalen oder minimalen Werte angibt.

3. Vorrichtung, wie im Anspruch 1 dargelegt, bei der der die Umwandlungszeit wahrnehmende Fühler (5) einen Teiler (21, 51) zum Teilen des reproduzierten, digitalen Signals durch n aufweist, wobei n eine positive, ganze Zahl ist, und die maximalen oder minimalen Werte der Umwandlungszeit des geteilten, reproduzierten, digitalen Signals wahrnimmt.

4. Vorrichtung, wie im Anspruch 1 dargelegt, ferner mit einem sich bewegenden Hilfsmittel (7) zur Bewegung der Wiedergabe-Vorrichtung (2) in radialer Richtung des Aufzeichnungsträgers (1), wobei der Motor (3) unter Verwendung eines reproduzierten Signals gesteuert wird, das zeitweise gegeben wird, wenn die Wiedergabe-Vorrichtung von dem sich bewegenden Hilfsmittel quer über eine Informationsspur des Aufzeichnungsträgers bewegt wird.

5. Vorrichtung, wie im Anspruch 1 dargelegt, bei der der Motorantrieb (6) zur Aufnahme eines dem Anhalten des Aufzeichnungsträgers dienenden Befehls verwendbar ist, um die Drehzahl des Motors (3) zu vermindern, bis aus dem Umwandlungszeitsignal wahrgenommen wird, daß die Lineargeschwindigkeit des Aufzeichnungsträgers unter einen vorherbestimmten Wert abgefallen ist.

6. Vorrichtung, wie im Anspruch 1 dargelegt, bei der der die Umwandlungszeit wahrnehmende Fühler (5) zur Wahrnehmung einer minimalen Umwandlungszeit befähigt ist, wenn die Zustandsumwandlungszeit gleich oder größer als ein vorherbestimmter Wert ist.

# FIG. 1

1 Recording medium

2 Reproducing means

3 Motor

| Waveform shaping means | 4 |

| Inversion time detecting means | 5 |

| Motor drive means | 6 |

# FIG. 2

1 Recording medium

2 Reproducing means

7

Moving means

3 Motor

4

Waveform shaping means

5

Inversion time detecting means

6

Motor drive means

# FIG. 3

13

# FIG. 4

# FIG. 5

# FIG. 6

# FIG. 7